# EUROPEAN PATENT APPLICATION

(11) **EP 3 054 694 A1**
(43) Date of publication of application: **10.08.2016**
(21) Application number: 15382038.6
(22) Date of filing: 04.02.2015
(51) Int. Cl.: H04N 21/43, H04N 21/439, H04N 21/442, H04N 21/658, H04N 21/4722, H04N 21/414

(54) **Device, server and system for interacting with broadcasting media content**

(71) Applicant: Iddeando Business Consulting, S.L., 28108 Alcobendas - Madrid (ES)
(72) Inventor: Jaquotot Calvo, Javier, 28108 Alcobendas - Madrid (ES); Jarabo Deleña, Sylvia, 28108 Alcobendas - Madrid (ES)
(74) Representative: Carvajal y Urquijo, Isabel

(57) **Abstract**

A user device (200) and a server (100) for interacting with broadcasting media content is disclosed. Distinctive data of the broadcasting media content is used to display interactive content during broadcasting in a synchronized manner. User inputs in response to the displayed content serve to analyze audience and to interact with viewers.

## Description

### Field of Invention

The present invention belongs to the field of telecommunications. In particular, it refers to applications and services that allow users to interact with broadcast channels.

### State of the Art

The state of the art provides methods to statistically derive the audience of a particular broadcast emission in a static way. For TV emissions, they consist of a device owned by the company in charge of audience measurement that connects to the TV of a selected group of users; the device also connects to a telecommunications network to send the data read to the server in charge of processing and storing them. After the user manually punches his/her identification code in the device, this device transmits at predefined intervals the selected channel in the TV set to which it is connected. From this information the measurement system extrapolates by statistical methods the audience of the channels and / or these particular time slots. For radio broadcast emissions, only off-line surveys are performed to collect audience information.

However, these methods are inefficient and not very accurate as they rely on the continued cooperation of the user interacting with the device.

On the other hand, there are programs, usually developed for mobile phones (eg Android applications and / or iOS), that allow users to send messages to specific numbers or addresses provided during a given emission or by other means. There are generic applications (twitter, facebook, SMS) to send messages to addresses or users previously created by the managers of the emissions.

Disadvantageously, the above proposals do not allow knowing whether the users sending the messages are actually watching the broadcasting media content, for example during a commercial break, a match, a movie, etc.

There are other proposals known that address a similar problem from a different approach. Mention is made to US patent US8863175, related to US20130347032 that proposes inserting specific advertisements according to the profile and preferences of the observer. This requires incorporating new elements to build the broadcast signal.

By contrast, the present invention can work with any broadcast emission and takes place in the server and the user device, which may be a general purpose device as a mobile telephone. The invention assures that the viewer is actually present at the time of emission. It also allows counting the number of observers attending to the emission in real time.

### Brief description of the invention

The present invention was made in view of the situation and the drawbacks of the prior art. As mentioned above, there is no need for installing any additional device on the TV set, and it does not require any adaptation or modification of the broadcast emission.

A goal of the present invention is to obtain accurate, reliable and real-time information about viewers who are actually attending to the broadcast emission.

The invention identifies when the piece of broadcast emission of interest occurs and allows the interaction of a user, regardless the type of television set. A user device is provided to allow this interaction. The information on the interaction can be collected from the user and be sent to a third party, for instance, it may be used to perform real-time measurement of audiences.

The invention also allows the definition of interactive multimedia content for pieces of a broadcast emission (eg. for a particular advertisement, a contest, etc.). The interactions may be dynamically managed and modified by a service provider. These interactive contents can be displayed on a user device to receive the user input. Specially, mobile phones (smartphones) are suitable for this purpose since most people have one and they incorporate the capabilities to download and execute applications as required. In this regard, the invention significantly simplifies statistical processing while improving the accuracy and reliability of the measurement of audience data.

The invention also contributes to reduce the drop of the audience while the advertising breaks are presented during an emission.

An object of the invention is a user device according to claim 1.

Another object of the invention is a server according to claim 5.

A further object of the invention is a system according to claim 10.

Particular embodiments of the invention are defined in dependent claims.

### BRIEF DESCRIPTION OF THE DRAWINGS

FIG. 1 illustrates interactions of several elements included in the system with other external elements
FIG. 2 illustrates a chronogram segmented in intervals.

### DETAILED DESCRIPTION

The characteristics of the invention will be clear from the following detailed description of preferential embodiments, given as non-restrictive examples.

Prior to an emission, the definition of time slots of the broadcast emission is pre-loaded on a user device **200.** Each emission time slot features a set of values, among them a time slot identifier, a status indicator, a start time, a time slot length indicator, an indicator of content loading time on the device, and an indicator of the error range of the start and end times. This information is in the central server **100.**

A set of multimedia elements to be presented during the broadcast of each emission timeslot defined is also pre-loaded on the user device. The referred multimedia elements may be audio and video files and a set of attributes that define actions to take in response to inputs of the user, eg clicking on an image. With inputs from multiple users, audience may be estimated. Also, other services can be deployed according to this scenario. For instance, the broadcaster may reward users after checking they are actually viewing a particular broadcast emission.

So it is important to synchronize the events on both sides (user device and emission from broadcaster). The detection of an emission time slot can be performed statically or dynamically. Both detection methods are addressed later.

Detecting the presence of the emission time slot of interest in the TV broadcast can be performed in static mode by using the pre-loaded information so that the presentation of information to the user is realized in the times indicated in the corresponding registers.

Optionally, a real-time identification can be performed by including a specific module (detection module **12**) of the server **100** that captures the acoustic signal of the broadcast emission and compares it with pre-loaded patterns. In this case, an indication is generated at the time of recognizing a pattern corresponding to a relevant emission time slot.

In both cases, once the emission time slot is detected, the user device **200** may display pre-defined multimedia information. The interaction of the user when the multimedia information is displayed can be collected from the user device for further analysis; eg keystroke, and relevant information associated with it, eg the user identity, connection time. A server **100** receives the information collected during the emission time slots and may use it to measure the audience in real-time and to build a socio-demographic profile of the viewers.

A telecommunications module is implemented in the central server **100** and in the user device **200** to enable the exchange of information between all the modules of the system detailed later. The telecommunications modules can be implemented for instance, by means of a network connection layer established between the user device **200** and the central server **100,** preferably using a wireless telecommunications carrier as an IP connection over GPRS 3G service, on a 2G network, or 4G, WiFi, SMS messages or MMS.

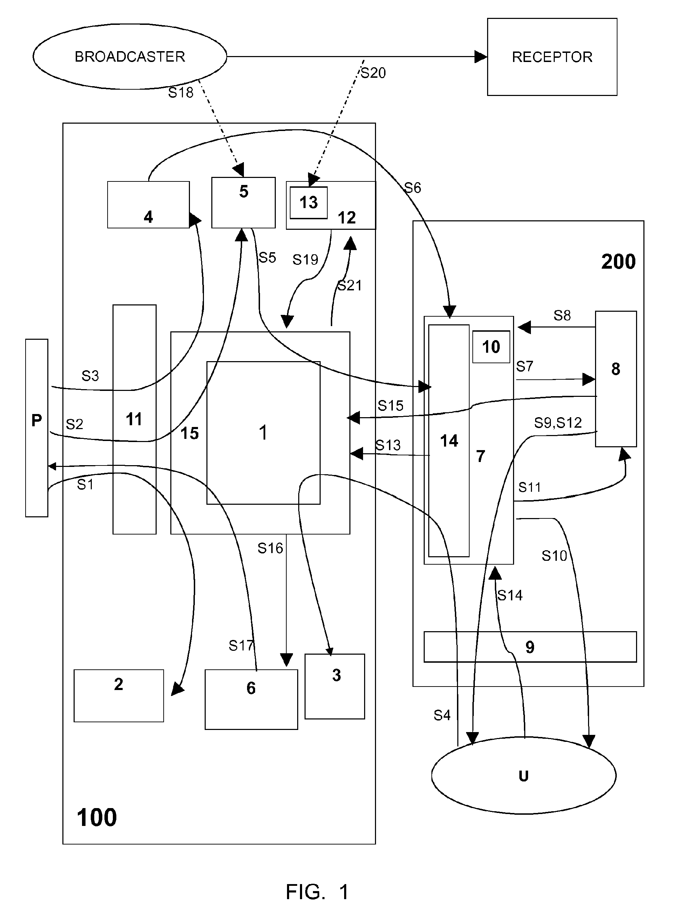

FIG. 1 shows an embodiment of the invention comprising a server **100** with a central processor **1** connected to a content provider register **2,** a subscribers register **3** for subscribed users, a multimedia content register **4,** a time slots register **5,** an audience information register **6** and a content provider interface **11.** A server telecommunication module **15** is in charge of sending and receiving data.

In this embodiment, these elements are built on a central server **100** comprising one or more physical processors forming a central processor **1** and one or more memory storage elements forming the content provider register **2,** the subscribers register **3,** the multimedia content register **4,** the time slots register **5** and the audience information register **6.** All elements are connected by a local data network.

FIG. 1 further shows a user device **200** with a local processor **7** including an internal clock **10,** a local memory **8** and a local interface **9** that, in this embodiment, includes a screen and a keyboard, either physical or virtual. The user device **200** is preferably a mobile terminal connected to the Internet (i.e. PDA, smart phone, tablet, phablet, wearable device) via a telecommunication module **14.**

Optionally, as an alternative or complement to the time slots register **5,** the central server **100** includes a dynamic detection module **12** comprising an audio module **13** that extracts the audio input from one or several broadcast channels, The dynamic detection module **12** is controlled by the central processor **1** to dynamically detect media content when emitted on TV.

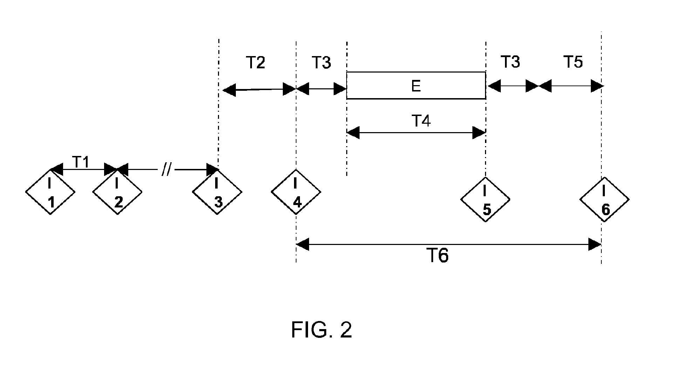

Connections of several elements are also illustrated in FIG. 2 and explained in the following paragraphs:
**S1:** Through the content provider interface **11,** the content provider **P** sends to the central processor **1** a file with its data and credentials to access the service. In this embodiment the service refers to playing a game by replying questions about the emission time slot actually running in the user's TV set; the questions are presented in the user's device. The central processor **1** validates the file received and sends it to the content provider register **2.** The content provider register **2** stores the file. The central processor **1** grants access to the service for the contents provider **P.**
**S2:** The content provider **P** defines, through the content provider interface **11,** emission time slots of interest by sending the information that defines each emission time slot to the central processor **1.** The central processor **1** stores this information in the emission time slots register **5.**
**S3:** Through the content provider interface **11,** the content provider **P** sends to the central processor **1** a set of multimedia elements and the identification of the emission time slot during which they should be presented to the user device **200.** The central processor **1** stores these items in the multimedia contents register **4.**
**S4:** When a user **U** requests registration for the first time through the local interface **9,** the local processor **7** collects and sends to the central processor **1** the user credentials and user profile information. The central processor **1** stores the data in the subscriber register **3.**
**S5:** The central processor **1** retrieves information of the emission of media content from the time slots register **5** and sends it to the local processor **7** of the user device **200.**
**S6:** The central processor **1** retrieves the information relating to the registered user contained in the multimedia content register **4** and sends it to the local processor **7.**
**S7:** The local processor **7** stores the information received in step **S5** and **S6** in the local memory **8.**
**S8:** The local processor **7** retrieves and compares the start time of the emission time slots stored in the local memory **8** with the current time provided by its internal clock **10.**
**S9:** When the time provided by the local clock matches the start of one of the emission time slot, the local processor **7** retrieves the multimedia elements stored in the local memory **8** and presents it to the user **U** via the local interface **9** to be displayed.
**S10:** The local interface **9** allows user interactions. For instance, an interaction may occur as follows. Interactive multimedia content is implemented in the form of several images displayed on the local interface **9.** One of images relates to the media content being broadcasted on TV at that time. In order to validate the user is currently watching this media content, he/she should select the correct image. Upon user selection, information is generated and transmitted to the local processor **7.**
**S11:** The local processor **7** stores the information in the local memory **8.**
**S12:** The local processor **7** gets a new image or set of images from local memory **8** and presents them to the user via the local interface **9.** Preferably, the information about the multimedia content to be presented at each moment is stored as part of each multimedia content file.
**S13:** Optionally, the local processor **7** immediately sends the event information to the central processor **1.**
**S14:** When the local processor **7** detects that the actual time provided by the internal clock **10** corresponds to the end of an emission time slot, it sends an order to the local interface **9** to present an image of end of emission time slot.
**S15:** The local processor **7** retrieves from the local memory **8** the information stored during the emission time slot and sends it to the central processor **1.**
**S16:** The central processor **1** processes the information received, it may retrieve additional information. For instance, for a better characterization of the audience, additional data from the profile of user register **3** can be retrieved to calculate socio-demographic profile. The central processor **1** stores the information in the register of audience information **6.**
**S17:** The content provider queries at any time the information generated by the system through the interface content provider **11.**
**S18:** Optionally, the TV broadcaster can store the information about emission time slots directly in the emission time slot register **5.**
**S19:** Optionally, the content provider **P** may use dynamic time slot detection by activating a specific parameter. Consequently, the central processor **1** could leave the time slot information empty at the moment of pre-loading information. The central processor sends the order to detect acoustic patterns to the dynamic detection module **12.**
**S20:** A dynamic detection module **12,** preferably in the central server **100,** dynamically detects emission bands by activating the audio module **13,** getting the acoustic emission signal from the broadcast emission and comparing it with the pre-defined pattern.
**S21:** When the dynamic detection module **12** detects a coincidence of the received signal and the stored pattern, it signals the event to the central processor **1,** the local processor **1** updates the time slot start time in the local memory **8** and instructs the local processor **7** to resume the process from step **S9** described above.

FIG. 2 graphically represents the pre-loaded information synchronization process. This chronogram applies for an embodiment implementing static recognition. The time intervals defined are the following:
**I1** represents the time when the relevant time slots and associated multimedia contents for the emissions are sent by the central processor **1** to the local processor **7.** In this embodiment this process is performed on a daily basis. No notification is delivered to the local device **200** neither to the user.
**T1** represents the time required to complete the transfer between the central processor **1** and the local processor **2.**
**I2** represent the time when the multimedia information is available and ready to be presented to the user. From this time on, the user can see the planned time slots for the day when launching the application in his/her device but no action will be available.
**I3** represents the time when a time slot is identified to start according to the information preloaded by the content provider.
**T2** represents the time that a time slot start is presented in advance to the actual start of the emission. This time is pre-defined by the content provider in one of the parameters provided to the time slot register **5.**
**T3** represents the range of error that applies to the information about the time of start and end of the emission time slot.
**T2+T3** is the guard time applied to ensure the multimedia information is presented at the moment of the emission time slot is effectively presented in the TV set, plus the time allowed to the user to get ready to start his/her interaction.
**I4** is the time when the emission time slot actually starts to be presented.
**T4** is the actual duration of the emission time slot.
**I5** is the time when the emission time slot actually ends.
**T5** is the time allowed to the user to continue interacting after the emission time slot has finished. This time is pre-defined by the content provider in one of the parameters provided to the time slot register.
**T6** is the total time while the multimedia information is presented to the user and interactions are allowed.
**I6** is the time when the multimedia information is stopped to be presented, and the user is communicated about the end of the service.

## Claims

1. A user device (200) for interacting with broadcasting media content **characterized in that** it comprises:
- a telecommunication module (14) configured to receive distinctive data on the broadcasting media content, the distinctive data comprising information of identification, start and finish of the media content,
- a local memory (8) configured to store the received distinctive data,
- a local interface (9) configured to display interactive content during the broadcasting media content, the local interface (9) further configured to receive at least a user input in response,
- a local processor (7) configured to generate, according to the identification and start of the media content retrieved from the local memory, the interactive content to be displayed on the local interface (9), the local processor (7) further configured to store the user input associated therewith in the local memory (8).

2. The user device according to claim 1, wherein distinctive data comprises time slot values of start and end of the broadcast media content and the local processor (7) comprises a local clock (10) to synchronize the interactive content to be displayed on the local interface (9).

3. The user device according to claim 1 or 2, wherein the telecommunication module (14) is configured to send back the identification of the broadcast media content and the user input associated therewith to a server (100).

4. The user device according to any of claims 1 to 3, wherein the user device is selectable among:
a mobile phone,
a personal digital agenda,
a tablet,
a phablet,
a laptop,
a wearable device.

5. A server (100) for interacting with broadcasting media content **characterized in that** it comprises:
- a server telecommunication module (15) configured to connect with a content provider (P) and to receive distinctive data of the broadcasting media content, the distinctive data comprising information of identification, start and finish of the media content,
- storage means (2,3,4,5,6) comprising a multimedia content register (4),
- a central processor (1) configured to store the received distinctive data in the multimedia content register (4), the central processor (1) further configured , to send the distinctive data of the broadcasting media content to at least one user device (200), and to receive at least one user input associated therewith via the telecommunication module (15).

6. The server according to claim 5, wherein storage means comprise a subscriber register (3) and the distinctive data of the broadcasting media content is sent to a plurality of user devices (200) retrieved therefrom.

7. The server according to claim 5 or 6, wherein the central processor (1) retrieves user profile information from the subscriber register (3), the central processor (1) further associates it with at least one user input received to store it in an audience register (6) comprised in the storage means.

8. The server according to any previous claims 6 to 7, wherein start and end of the broadcast media content comprises sound pattern information and the central processor (1) comprises an audio module (13) configured to receive and to recognize, in real-time, a pattern from sound of the broadcasting media content, to synchronize the interactive content.

9. The server according to any previous claims 6 to 8, wherein the distinctive data of the broadcasting media content is sent to the user device (200) upon a request received therefrom.

10. A system for interacting with broadcasting media content **characterized in that** it comprises at least one user device (100) according to any of claims 1 to 4 and a central server (100) according to any of claims 5 to 9.
